# EUROPEAN PATENT SPECIFICATION

(11) **EP 1 270 672 B1**
(45) Date of publication and mention of the grant of the patent: **14.11.2007**
(21) Application number: 01202484.0
(22) Date of filing: 28.06.2001
(51) Int. Cl.: C08L 89/04, C08L 89/06, A22C 13/00

(54) **Process for recovering native collagen**
Verfahren zur Wiedergewinnung von nativem Collagen
Procédé de récupération de collagène naturel

(43) Date of publication of application: 02.01.2003
(73) Proprietor: PV Industries B.V., 6691 EE Gendt (NL)
(72) Inventor: Visser, Petrus Rimke, 5343 JS Oss (NL)
(74) Representative: Kupecz, Arpad

(56) References cited:
- EP-A- 0 479 709
- WO-A-92/17503
- DE-A- 1 469 030
- DE-B- 1 101 700
- US-A- 5 686 262

## Description

The present invention relates to a process for recovering native collagen from fleshed of unfleshed animal hide or skin. By "native collagen" is understood throughout this specification and the appended claims collagen which has not been denatured, degraded or gelatinized.

In practice various methods are known for the recovery of collagen from animal skin, especially from porcine and bovine hide splits. The collagen obtained is used, among other things, in the manufacture of sausage casings, or in the formation of a sausage skin around a mass of foodstuff in the so-called co-extrusion process.

In EP-A-0.206.819 (Devro Inc.) a method has been disclosed for the preparation of an improved collagen sausage skin, in which an extrudable gel is formed, of which the dry solids comprise a mixture of 50-80 wt% of bovine collagen and 20-50 wt% of acidulated brine-extracted pig skin. The formed gel is then extruded to a tube-shaped sausage casing.

In EP-A-0.479.709 (Teepak Inc.) a process has been described, in which collagen is prepared from cheaper raw materials than hides, such as animal connective tissue (e.g. ligaments, blood veseels, cartilage, etc.) by subjecting the raw material to a series of separation steps, in which undesired constituents, such as fat, bone, meat and other protein are separated off and finally the collagen remains. It will be clear that this process is complicated and hence costly. Also the yield in collagen is rather low and the process entials the use or organic solvents, which is undesirbale in the food industry.

A problem with using pig skin (rind) as raw material for collagen preparation is the high fat content of the rind. In order to use collagen as raw material, for example, for sausage casings, a low fat content is essential. Moreover, after sticking and bleeding, pigs are usually scalded and flamed with the result that at least some of the collagen protein is denaturated and/or gelatinzed. For the preparation of sausage casings this gelatinization is also undesirable.

Bovine of cattle hides have little subcataneous fat. However, a problem with cattle hides is that certain parts, such as shoulders and bellies, are sometimes difficult to flesh. In practice, therefore, only trimmed cattle hides (sides and croupons) are utilized, whereas these shoulders and bellies, which are much more difficult to flesh mechanically, have a much lower yield/value. An increasing demand of the leather industry for hides and a decreasing consumption of beef due to the occurrence of the BSE disease in cattle has increased the price of bovine hides. Also the use of collagen from bovine hides in sausage casings needs to be declared and indicated on the prodct. Hence there is an increasing demand for pig skin collagen or other collagen from cheaper raw materials.

PCT/SE92/00192 (WO 92/17503) discloses a method for the production of collagen; collagen produced through the method and use of collagen.

DE-A-1 101 700 discloses a process for the preparation of Formkörpern from collagen containing tissues.

The object of the present invention is to overcome the problems mentioned above and to meet the increasing demand for pig skin collagen. This objective is achieved according to the present invention by a process for recovering native collagen from fleshed or non-fleshed animal hide or skin, which is characterized by:
(a) comminuting the hide of skin to a particle size below 1mm, preferably below 80 microns, preferably partially in an aqueous suspension
(b) adjusting the pH of the aqueous suspension to a value from 8 to 12, preferably from 9 to 11, and
(c) adding to the aqueous alkaline suspension a protease preferably an endoprotease or an endopeptidase, which does not degrade the native collagen;
(d) acidifying the aqueous alkaline suspension preferably to a pH value of from 5 to 6,
(e) separating off the native collagen as a solid phase;
(f) resuspending the obtained solid phase in water for disinfection and further purification;
(g) disinfecting and further purifying the aqueous suspension of native collagen;
(h) separating off the purified and disinfected native collagen as a solid phase, keeping the temperature during the process below 35°C, preferably at from 23°C to 30°C.

It has been found that with the process according to the present invention denaturated collagen which might be present in the raw material will be hydrolysed enzymatically, whereas native collagen remains intact. The fat which might be present in the raw material floats to the top and can easily be separated off. The obtained solid phase of native collagen finally can also be separated from the liquid phase, e.g. by screening, flotation, centrifuging, decanting and the like. The present invention thus provides a process for the recovery of native and practically fat-free collagen from partially denaturated collagen protein.

Another advantage of the process according to the present invention is that the recovery of native collagen is considerably less cumbersome, faster and easier to mechanize. Moreover it has been found that water consumption and COD (Chemical Oxygen Demand) of the obtained effluents are lower.

Still another advantage of the process according to the present invention is that prior fleshing of cattle hides or pig skins is not necessary, which is both cost- and timesaving.

A further advantage of the present invention is that when using native collagen obtained from pig skin by the process of the present invention in the manufacture of sausage casings, very smooth sausage casings are obtained.

Although in principle every suitable animal skin can be used, porcine skins and bovine hides commercially are the most interesting, also because of their availability. Preferably porcine skins are used.

According to a further embodiment of the present invention as bovine hide low valued limed and depilated scrap pieces, such as shoulders, bellies and various trimmings from the leather industry are used.
These low valued scrap pieces previously were unsuitable for the recovery of native collagen, because they were not or hardy to flesh mechanically.

According to the present invention, however, there is no need to remove residual flesh. As market prices for these low unvalued pieces can be as low as a tenth of those for marketable pieces, a considerable cost-saving is obtained. The present invention therefore enables to use raw materials which heretofore could hardly or not economically be used for the recovery of native collagen.

According to the present invention the hide or skin, fleshed or not, is comminuted by means of for example a meat grinder. In general the skin may be reduced to any desired size. Preferably, however, the hide or skin is reduced to a size which makes it particularly accessible for the various active agents used to recover the native collagen. It has been found that the optimal particle size is less than 1 mm and preferably less than 80 microns. With a particle size in that order the separation of native collagen from the hide or skin is optimal, the fat is separated off better and the material is very accessible for the enzyme treatment.

During the entire process the temperature is kept at such a level that no unacceptable degradation, denaturation or gelatinization of the native collagen will occur. The temperature depends somewhat on the type of collagen treated, but it has been found that the temperature should not exceed 35°C during the process. Preferably the temperature is kept at 23°C to 30°C and most preferably at 28°C. At temperatures of 28 to 29°C the pig fat melts, so that separation by simply skimming it off can be effected.

According to a preferred embodiment of the present invention the pH of the aqueous alkaline suspension is adjusted to a value in the range of from 8 to 12, preferably from 9 to 11. As alkaline agent it is possible to use, among others, sodium hydroxide or calcium hydroxide.

It has been shown to be advantageous, especially for the recovery of native collagen from bovine or cattle hide or pig skin, to add alkali metal metabisulphite, such as sodium metabisulphite, to the alkaline aqueous suspension. This addition reduces or stops bacterial growth, for which growth the conditions might be suitable. By the combined action of the protease and the alkali metal metabisulphite any residual flesh will be hydrolysed and solubilised. Native collagen, however, will not be attacked and remains in suspension. Suitable proteases which do not degrade the native collagen are among others Alcalase and Esperase (available from Novo Nordisk Bioindustrie, Bagsvaerd, Denmark). Preferably the protease is an endoprotease or an endopeptidase.

According to the present invention, when the hydrolysis reaction has proceeded sufficiently, the suspension is acidified. Preferably the aqueous suspension is acidified to a pH value of from 5 to 6. As acids it is possible to use innocuous acids, such as lactic acid, acetic acid or hydrochloric acid.

The purpose of acidifying the aqueous suspension is, among others, the deliming of the suspension. It will be clear, however, that such deliming action is necessary only for hide or skin material which is obtained in the form of limed split, having a pH of 12. Moreover, at a pH value of from 5 to 6, the swelling of the native collagen is minimal, so that its separation is facilitated.

The native collagen can be separated from the suspension by means of screening, flotation, centrifuging, decanting, and the like. After the native collagen has been separated off from the acidified suspension in the form of a solid phase, this obtained solid phase is resuspended in water for disinfection and further purification. If these treatments have been effected, the native collagen is again separated off from the suspension by means of e.g. screening, flotation, decanting, centrifuging, and the like.

According to a preferred embodiment of the process according to the present invention, the native collagen which is separated off from the acidified suspension as a solid phase is disinfected, preferably with an agent selected from hydrogen peroxide, alkali metal hypochlorite and ozone. Other methods of disinfection can also be used, provided that denaturation of the native collagen is avoided. During the disinfection treatment also residual enzyme will be inactivated, and traces of hydrolysate and fat will be discarded during the further purification of the native collagen. The treatment with hydrogen peroxide will also effect oxidation of any residual amounts of alkali metal metabisulphite.

The solid phase can be subjected to further processes known in the art, such as deamidation by means of a treatment with a sodium sulphate/sodium hydroxide-mixture. It has been found, however, that with the process according to the present invention the combined action of protease and the high pH-value also decreases the amide nitrogen content. In some cases,therefore, an additional advantage of the process according to the present invention is that there is no need for a further deamidation step.

The solid phase of native collagen obtained may be converted into a smooth paste by a number of successive comminution steps with the addition of acid and other additives. This smooth paste may be used, for example, to form sausage casings by extrusion or to form edible casings around food material in co-extrusion processes.

Native collagen prepared by a process according to the present invention can be added to meat products.

Water binding agents or texture improving agents for meat products can at least partially consist of native collagen prepared by a process according to the present invention.

Food casings, sausage casings, films, fibres or shaped products can at least partially consist of native collagen prepared by a process according to the present invention.

In using native collagen from pig skin, obtained by a process according to the present invention, in the manufacture of sausage casing by extrusion or in the manufacture of sausage by a co-extrusion process, it is possible that a sausage casing or skin is obtained with a rather low wet strength. This problem can be solved by admixture of collagen from tendons or native collagen from other sources. Also the shrink properties upon heating of sausages provided with a casing or skin consisting of the native collagen obtained by a process according to the present invention, can be improved by using mixtures of different types of native collagen. Also the addition of non-collagen fibres, such as cellulose fibres, and the use of cross-linking agents, such as glyoxal or liquid smoke, can lead to an improvement in or change of the properties of sausage casing or skin consisting of native collagen obtained by a process according to the present invention.

The present invention will now be illustrated by means of the following examples.

### EXAMPLE 1

### Recovery of native collagen from pig skin.

500 kg of separator rind (ex Compaxo, Gouda, The Netherlands), which is a mixture of rind, fat and tendon, were comminuted in a meat grinder (Simo, ex Slagelse, Denmark) to a uniform particle size of 2 mm at a temperature of 10°C, suspended in 500 liters of water and further comminuted in a meat cutter (Stephan Microcutter, ex A. Stephan, Hameln, Germany) to a fibrous mass with fibre size of 75 microns. The obtained suspension was transferred into a stirred tank in which water was added to a total volume of 3000 liters. Subsequently the temperature was adjusted to 28-29°C, upon which fat appeared on the surface of the suspension. 150 kg of fat were skimmed off the surface and after that the pH of the suspension was adjusted to 9 by the addition of sodium hydroxide and 500 grams of protease (Alcalase, ex, Novo Nordisk Bioindustrie, Bagsvaerd, Denmark) and 5 kg of sodium metabisulphite were added. By the action of the endoprotease and the sodium metabisulphite the hair follicles and hair parts were partially hydrolysed and softened. Also gelatinized collagen protein was hydrolysed, but native collagen remained intact. After 3 hours the pH of the alkaline aqueous suspension was adjusted to 5.5 by addition of hydrochloric acid and after this a solid phase of native collagen was separated off, using a (Flottweg GmbH, Vilsbiburg Germany) decanter.

The solid phase obtained was resuspended in 3000 1 of water and 5 kg of 50% hydrogen peroxide were added and another 20 kg of fat was skimmed off at a temperature of 28°C. Subsequently 250 kg of a solid phase of native collagen having a protein content of 23% was separated off, using the same decanter.

The 250 kg of native collagen were mixed with water to a total weight of 1400 kg, 3.5 kg of cellulose fibres were added and the pH of the mixture obtained was adjusted to 3.0 by addition of lactic acid. Upon deaeration and homogenization a smooth collagen gel was obtained. This gel could be co-extruded on a Stork-Protecon sausage co-extrusion line, leading to a sausage with a skin of good wet strength. The collagen gel also appeared to be suitable for the manufacture of sausages having a collagen skin which could be vacuum- and gas-packed or could be sterilised in cans.

### EXAMPLE 2

### Recovery of native collagen from bovine hides.

500 kg of limed shoulder pieces from a tannery were comminuted in a meat grinder (Simo, ex Slagelse, Denmark) to a uniform particle size of 2-3 mm at a temperature of 10°C and subsequently suspended in 500 liters of water and further comminuted as described in Example 1 to a fibrous mass with fiber size of less than 75 microns.
The obtained suspension was mixed with 3000 liters of water in a stirred tank and the pH was adjusted to approximately 10 by adding 5 liter of 30% hydrochloric acid. The temperature was adjusted at 25°C and 500 grams of proteolytic enzyme (Esperase, ex. Novo Nordisk Bioindustrie, Bagsvaerd, Denmark) and 5 kg of sodium metabisulphite were added.
By the conjoint action of the enzyme and the sodium metabisulphite the residual flesh was hydrolysed and solubilized. The native collagen was not attacked and remained in suspension. After 4 hours, 8 liters of 30% hydrochloric acid were added to adjust the pH of the suspension to approximately 5.5. By decantation as described in Example 1, a solid phase of native collagen was separated off from the liquid phase. This solid phase (475 kg) was resuspended in 2500 liters of water and 10 liters of 50% hydrogen peroxide were added to inactivate the residual enzyme. Then the solid and the liquid phase were separated by decantation as described in Example 1. The yield was 450 kg of collagen fibres having a protein content of 25%. Drying resulted in a collagen fibre, which in sausages showed good water binding and texture improving properties.

### EXAMPLE 3

200 kg of the wet collagen fibres, obtained in Example 2 and 3.5 kg of cellulose fibres were suspended in 1000 liters of water, and the pH of the mixture was adjusted to 4.0 with lactic acid. The suspension was ground, blended with lactic acid to a pH value of 3.0, de-aerated and homogenized. The resulting collagen gel was co-extruded on a Stork-Protecon sausage co-extrusion line to a sausage having a collagen skin with good wet strength. The collagen gel was also suitable as sausage casing for vacuum-packed sausages and for sausages to be retorted in cans.

## Claims

1. A process for recovering native collagen from fleshed or non-fleshed animal hide or skin, **characterized by**
a) comminuting the hide or skin to a particle size below 1 mm, preferably below 80 microns, preferably partially in an aqueous suspension,
b) adjusting the pH of the aqueous suspension to a value from 8 to 12, preferably from 9 to 11,
c) adding to the aqueous alkaline suspension a protease, preferably an endoprotease or an endopeptidase, which does not degrade the native collagen,
d) acidifying the aqueous alkaline suspension, preferably to a pH value of from 5 to 6,
e) separating off the native collagen as a solid phase,
f) resuspending the obtained solid phase in water for disinfection and further purification,
g) disinfecting and further purifying the aqueous suspension of native collagen,
h) separating off the disinfected and purified native collagen as a solid phase,
keeping the temperature during the process below 35°C preferably at from 23°C to 30°C.

2. A process according to claim 1, in which the animal hide is selected from the group consisting of bovine hide, porcine skin, low valued bovine hide scrap from the leather industry, and bovine hide in form of shoulders, bellies and/or various trimmings.

3. A process according to claim 1 and 2, in which in step b) or c) an alkali metal metabisulphite is added to the aqueous suspension.

## Patentansprüche

1. Ein Prozess zum Wiedergewinnen von nativem Kollagen aus mit Fleisch behaftetem oder nicht mit Fleisch behaftetem Tierfell oder mit Fleisch behafteter oder nicht mit Fleisch behafteter Tierhaut, **gekennzeichnet durch**
a) Verkleinern des Fells oder der Haut auf eine Partikelgröße unterhalb 1 mm, vorzugsweise unterhalb 80 Mikrometern, vorzugsweise teilweise in einer wässrigen Suspension,
b) Einstellen des pH-Werts der wässrigen Suspension auf einen Wert von 8 bis 12, vorzugsweise von 9 bis 11,
c) Hinzufügen einer Protease, vorzugsweise einer Endoprotease oder einer Endopeptidase, die das native Kollagen nicht abbaut, zu der wässrigen alkalischen Suspension,
d) Ansäuern der wässrigen alkalischen Suspension, vorzugsweise auf einen pH-Wert von 5 bis 6,
e) Abtrennen des nativen Kollagens als feste Phase,
f) erneutes Suspendieren der erhaltenen festen Phase in Wasser zur Desinfektion und weiteren Reinigung,
g) Desinfizieren und weiteres Reinigen der wässrigen Suspension aus nativem Kollagen,
h) Abtrennen des desinfizierten und gereinigten nativen Kollagens als feste Phase,
Halten der Temperatur unterhalb 35°C, vorzugsweise bei von 23°C bis 30°C, während des Prozesses.

2. Ein Prozess gemäß Anspruch 1, bei dem das Tierfell aus der Gruppe ausgewählt ist, die aus Rinderfell, Schweinehaut, minderwertigem Rinderfellausschuss aus der Lederindustrie und Rinderfell in Form von Schultern, Bäuchen und/oder verschiedenen Abfällen besteht.

3. Ein Prozess gemäß Anspruch 1 oder 2, bei dem bei Schritt b) oder c) ein Alkalimetall-Metabisulphit zu der wässrigen Suspension hinzugegeben wird.

## Revendications

1. Procédé pour récupérer du collagène naturel à partir du cuir ou de la peau, écharné ou non écharné, d'un animal, **caractérisé par**
a) la réduction en particules fines du cuir ou de la peau à des dimensions de particules inférieures à 1 mm, de préférence inférieures 80 micromètres, de préférence partiellement dans une suspension aqueuse,
b) l'ajustement du pH de la suspension aqueuse à une valeur de 8 à 12, de préférence de 9 à 11,
c) l'addition à la suspension alcaline aqueuse d'une protéase, de préférence d'une endoprotéase ou d'une endopeptidase, qui ne dégrade pas le collagène naturel,
d) l'acidification de la suspension alcaline aqueuse, de préférence à une valeur de pH de 5 à 6,
e) la séparation du collagène naturel sous forme d'une phase solide,
f) la remise en suspension de la phase solide obtenue dans de l'eau à des fins de désinfection et de purification supplémentaire,
g) la désinfection et la purification supplémentaire de la suspension aqueuse de collagène naturel,
h) la séparation du collagène naturel désinfecté et purifié sous forme d'une phase solide,
en maintenant la température pendant le procédé inférieure à 35°C, de préférence de 23°C à 30°C.

2. Procédé suivant la revendication 1, dans lequel le cuir de l'animal est choisi dans le groupe consistant en cuir bovin, cuir porcin, un déchet de cuir bovin de faible valeur provenant de l'industrie du cuir et du cuir bovin sous forme de collets, de flancs et/ou de diverses rognures.

3. Procédé suivant les revendications 1 et 2, dans laquelle, dans l'étape b) ou c), un métabisulfite de métal alcalin est ajouté à la suspension aqueuse.
